# EUROPÄISCHE PATENTSCHRIFT

(11) **EP 0 682 966 B1**
(45) Veröffentlichungstag und Bekanntmachung des Hinweises auf die Patenterteilung: **11.02.1998**
(21) Anmeldenummer: 95103540.1
(22) Anmeldetag: 11.03.1995
(51) Int. Cl.: B01D 17/02, E03F 5/16

(54) **Selbsttätig wirkender Abschluss**
Automatically acting shut-off
Fermeture à action automatique

(30) Priorität: 18.05.1994 DE 4417291
(43) Veröffentlichungstag der Anmeldung: 22.11.1995
(73) Patentinhaber: RHEBAU Rheinische Beton- und Bauindustrie GmbH & Co., 41541 Dormagen (DE)
(72) Erfinder: Mietzner, Martin, D-50374 Erftstadt-Liblar (DE); Gester, Thomas, D-41541 Dormagen (DE)
(74) Vertreter: Patentanwälte Hauck, Graalfs, Wehnert, Döring, Siemons

(56) Entgegenhaltungen:
- EP-A- 0 037 855
- EP-A- 0 046 277
- EP-A- 0 276 861
- EP-A- 0 333 925
- EP-A- 0 434 078
- DE-A- 2 441 401
- DE-A- 4 306 807
- DE-U- 8 907 315
- US-A- 5 348 041

## Beschreibung

Die vorliegende Erfindung betrifft einen selbsttätig wirkenden Abschluß mit den Merkmalen des Oberbegriffs des Patentanspruchs 1.

Selbsttätig wirkende Abschlüsse sind bekannt. Sie haben die Aufgabe, bei einem Leichtflüssigkeitsabscheider den Eintritt von Leichtflüssigkeit in das dem Abscheider zugeordnete Kanalsystem zu verhindern. Bei fortwährendem Zulauf des Leichtflüssigkeits/Schwerflüssigkeits-Gemisches in den Abscheider, der keinen speziellen Leichtflüssigkeitsablauf aufweist und dessen Leichtflüssigkeit periodisch aus dem Abscheider entfernt werden muß, nimmt die Dicke der sich auf der Schwerflüssigkeit ausbildenden Leichtflüssigkeitsschicht allmählich zu. Es besteht dabei die Gefahr, daß bei nicht rechtzeitiger Entfernung der Leichtflüssigkeit aus dem Abscheider die Leichtflüssigkeitsschicht so dick wird, daß ihr unterer Rand den Schwerflüssigkeitsablauf erreicht, so daß auf diese Weise Leichtflüssigkeit über den Schwerflüssigkeitsablauf in das nachgeordnete Kanalsystem gelangt, was in jedem Falle vermieden werden muß. Hierzu hat man einen selbsttätig wirkenden Abschluß entwickelt, der im wesentlichen aus einem den Schwerflüssigkeitsablauf umgebenden Ventilsitz und einem damit zusammenwirkenden schwimmergesteuerten Ventilkörper besteht. Der Schwimmer ist so tariert, daß er sich in der Grenzschicht zwischen Schwerflüssigkeit und Leichtflüssigkeit befindet. Mit zunehmender Dicke der Leichtflüssigkeitsschicht wird daher der Schwimmer abgesenkt, wodurch der hieran befestigte Ventilkörper abgesenkt wird und schließlich mit dem Ventilsitz am Schwerflüssigkeitsablauf in Anlage tritt. Auf diese Weise wird der Schwerflüssigkeitsablauf geschlossen, so daß in diesen keine Leichtflüssigkeit mehr eindringen kann. Der den Ventilkörper steuernde Schwimmer ist in bezug auf die im Abscheider vorhandene Leichtflüssigkeit tariert, so daß eine einwandfreie Funktionsweise des Schwimmers gewährleistet ist.

Es ist bekannt, einen derartigen selbsttätig wirkenden Abschluß so auszubilden, daß der Ventilsitz eine horizontale, den Schwerflüssigkeitsablauf umgebende, als Ringfläche ausgebildete Dichtfläche besitzt, die mit einer entsprechenden horizontalen Dichtfläche an der Unterseite des Ventilkörpers zusammenwirkt. Beim Schließen des selbsttätigen Abschlusses legt sich daher die horizontale Dichtfläche (Ringfläche) des Ventilkörpers auf die horizontale Dichtfläche (Ringfläche) des Ventilsitzes. In der Praxis hat sich jedoch gezeigt, daß derart ausgebildete selbsttätige Abschlüsse die heute gestellten erhöhten Anforderungen in bezug auf die Dichtigkeit nicht erfüllen. So haben Versuche ergeben, daß sich kein absolut dichter Abschluß zwischen den zusammenwirkenden Dichtflächen erzielen läßt, was mannigfaltige Ursachen haben kann, wie beispielsweise Ungenauigkeiten bei der Herstellung, Verkanten des Ventilkörpers beim Aufsetzen, Ansammeln von Festkörperteilchen auf den Dichtflächen etc.

Ein selbsttätig wirkender Abschluß mit den Merkmalen des Oberbegriffes des Patentanspruches 1 ist aus der DE-A 24 41 401 bekannt. Bei diesem bekannten selbsttätigen Abschluß ist der Ventilkörper etwa halbkugelförmig ausgebildet und wirkt mit einem Ventilsitz zusammen, der eine konisch ausgebildete Dichtfläche besitzt.

Der Erfindung liegt die Aufgabe zugrunde, einen selbsttätig wirkenden Abschluß der angegebenen Art zu schaffen, der sich durch eine besonders gute Dichtigkeit auszeichnet.

Diese Aufgabe wird erfindungsgemäß durch einen selbsttätig wirkenden Abschluß der angegebenen Art mit den kennzeichnenden Merkmalen des Patentanspruches 1 gelöst.

Bei der erfindungsgemäß ausgebildeten Lösung wirkt eine konisch ausgebildete Dichtfläche des Ventilsitzes mit einer entsprechenden konisch ausgebildeten Dichtfläche des Ventilkörpers zusammen. Wenn beide Flächen miteinander in Anlage treten, wird allein durch das Eigengewicht des Ventilkörpers ein dichter Abschluß zwischen den in Anlage stehenden Dichtflächen erreicht. Dies ist in erster Linie darauf zurückzuführen, daß die konischen Dichtflächen des Ventilsitzes eine Führungsfunktion für den Ventilkörper übernehmen, so daß dieser in die korrekte Ventilposition geführt wird und sich kein seitlicher Versatz ergibt. Des weiteren können sich auf den konischen Dichtflächen keine Feststoffpartikel ansammeln, die das dichte Schließen der Ventilkonstruktion verhindern könnten.

Besonders gute Dichtungseigenschaften lassen sich dadurch erzielen, daß der Ventilsitz eine ringförmige horizontale Auflagefläche und eine sich hieran anschließende konische Dichtfläche besitzt und der Ventilkörper hiermit zusammenwirkende Auflage- und Dichtflächen aufweist. Der Ventilkörper ist speziell so ausgebildet, daß er auf seiner Unterseite eine äußere Ringfläche und eine sich hieran anschließende, abwärts und einwärts verlaufende konische Dichtfläche umfaßt. Der Ventilkörper legt sich mit seiner konisch ausgebildeten Dichtfläche gegen die konische Dichtfläche des Ventilsitzes und mit seiner äußeren horizontalen Ringfläche, die ebenfalls als Dichtfläche ausgebildet sein kann, gegen die horizontale Auflagefläche des Ventilsitzes. Im geschlossenen Zustand der Ventilkonstruktion wird daher der konische Ventilspalt an seiner Oberseite durch die horizontale Ringfläche des Ventilkörpers abgedeckt, so daß keine Flüssigkeit direkt in diesen Spalt eindringen kann. Stattdessen kann Flüssigkeit nur seitlich zwischen die beiden horizontalen Ringflächen eindringen, wobei der anfänglich horizontale Spalt eine abrupte Umlenkung in den konischen Spalt erfährt. Hierdurch werden die Dichtungseigenschaften weiter verbessert, da insbesondere ein direktes Eindringen der Flüssigkeit von oben in den konischen Ventilspalt vermieden wird. Die Führungseigenschaften des Ventilsitzes werden beibehalten.

Der Ventilkörper ist vorzugsweise tellerförmig ausgebildet, wobei sein unterer Randbereich zumindest teilweise konisch ausgebildet ist. Um Ablagerungen von Feststoffpartikeln, insbesondere Schlamm, auf der Oberseite des Ventilkörpers zu vermeiden, besitzt dieser vorzugsweise eine gekrümmte Oberseite. Die Oberseite ist dabei in ihrem Randbereich zweckmäßigerweise stärker gekrümmt als in ihrem mittleren Bereich, was den Vorteil hat, daß der auf diese Weise relativ stark geneigte Randbereich besser mit entsprechenden Führungseinrichtungen, die nachfolgend beschrieben werden, zusammenwirken kann.

Bei einer speziellen Ausführungsform der Erfindung ist der Schwimmer breiter ausgebildet als der Ventilkörper. Hiermit läßt sich eine besonders gute Schwimmersteuerung des Ventilkörpers erzielen. Die Schwimmerführung ist vorzugsweise durch eine Vielzahl von Vertikalstäben gebildet, die eine Art Käfig bilden und bewirken, daß sich der Schwimmer linear auf- und abbewegt und nicht verkantet. Durch diese Führung wird im großen und ganzen sichergestellt, daß sich auch der mit dem Schwimmer vorzugsweise über eine Stange verbundene Ventilkörper linear auf- und abbewegt und nicht verkantet. Da jedoch bei der Erfindung im Gegensatz zum Stand der Technik mit den horizontalen Dichtflächen konische Dichtflächen vorgesehen sind, muß in bezug auf eine genaue Führung des Ventilkörpers erhöhtes Augenmerk gerichtet werden. Zwar besitzen die konischen Dichtflächen einen gewissen Selbstzentrierungseffekt, jedoch kann der Ventilkörper bereits oberhalb der konischen Dichtfläche des Ventilsitzes trotz Schwimmerführung in ungünstigen Fällen eine verkantete Lage einnehmen, die ein genaues Einführen in die konischen Dichtflächen des Schwerflüssigkeitsablaufes unmöglich macht. Um dies zu verhindern, sieht die Erfindung bei einer speziellen Ausführungsform vor, daß der Ventilkörper eine eigene Führung aufweist. Diese Führung des Ventilkörpers erweitert sich vorzugsweise ausgehend vom Ventilsitz nach oben und nach außen. Die Erweiterung bewirkt einen ähnlichen Selbstzentrierungseffekt wie die konische Dichtfläche des Ventilsitzes, d. h. der verkantete Ventilkörper gleitet an den sich nach unten verengenden Führungsflächen entlang und wird hierbei in eine Horizontallage gebracht.

Speziell ist die Führung des Ventilkörpers durch eine Vielzahl von sich vom Ventilsitz nach oben und außen erstreckenden Stäben gebildet, die vorzugsweise gekrümmt sind. Es versteht sich, daß diese Stäbe nur eine geringe Länge besitzen können, da sie nur zur Führung des Ventilkörpers in dem Bereich oberhalb des Ventilsitzes dienen. Die Führung des Schwimmers wird über die gesonderte Schwimmerführung bewerkstelligt.

Besonders gute Ergebnisse in bezug auf die Dichtigkeit des selbsttätig wirkenden Abschlusses haben sich bei einer Ausführungsform ergeben, bei der die Dichtflächen von Ventilsitz und Ventilkörper unter einem Winkel von 10° zur Vertikalen angeordnet sind.

Die Erfindung wird nachfolgend anhand eines Ausführungsbeispiels in Verbindung mit der Zeichnung im einzelnen erläutert. Es zeigen:
- Figur 1: einen Schnitt durch einen Leichtflüssigkeitsabscheider entlang Linie B-B in Figur 3, der mit einem selbsttätig wirkenden Abschluß nach dem Stand der Technik versehen ist;
- Figur 2: einen Schnitt durch den Leichtflüssigkeitsabscheider der Figur 1 entlang Linie A-A in Figur 3;
- Figur 3: einen Horizontalschnitt durch den Leichtflüssigkeitsabscheider der Figuren 1 und 2;
- Figur 4: einen erfindungsgemäß ausgebideten selbsttätig wirkenden Abschluß in schematischer Darstellung; und
- Figur 5: Einzelheiten des selbsttätig wirkenden Abschlusses der Figur 4 in vergrößerter Darstellung.

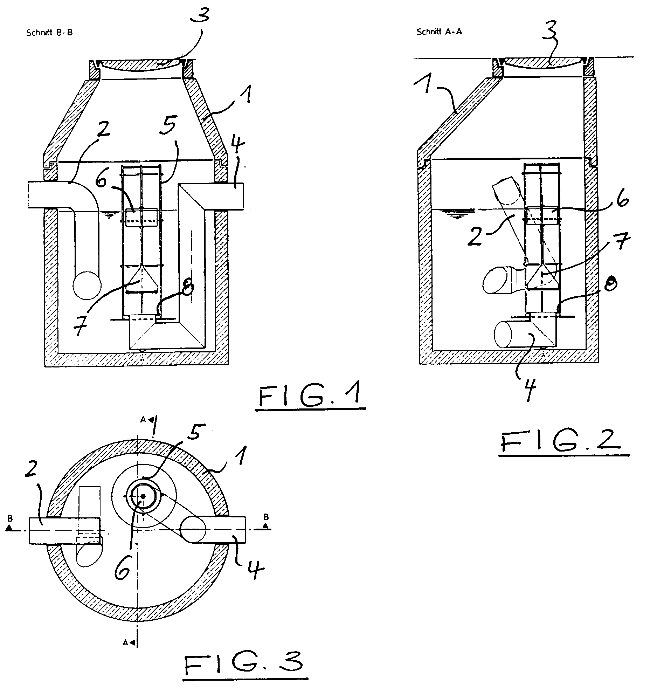

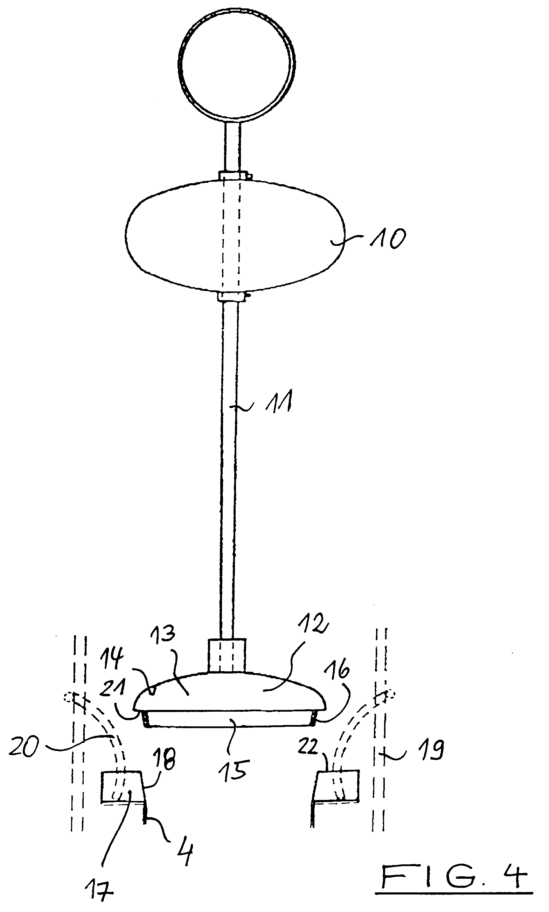

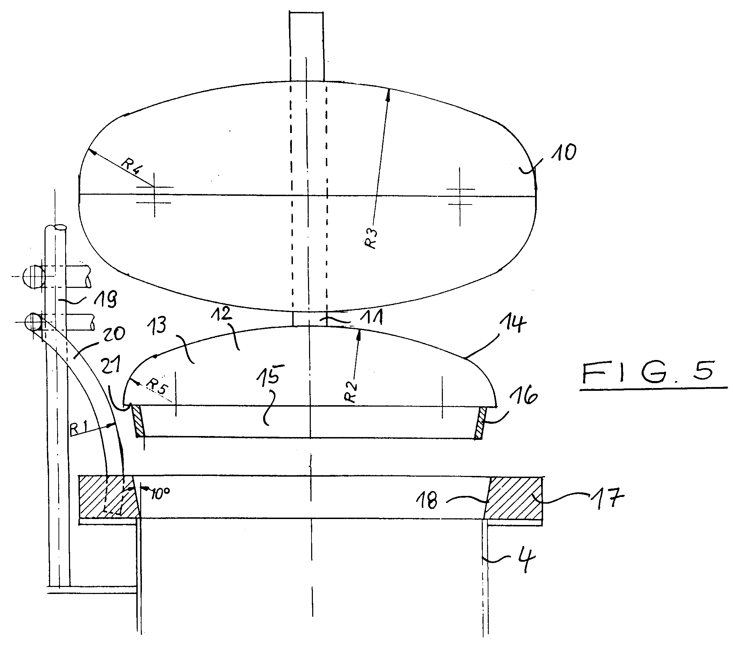

Die Figuren 1 bis 3 zeigen einen Leichtflüssigkeitsabscheider 1, der mit einem selbsttätig wirkendem Abschluß nach dem Stand der Technik versehen ist. Diese Figuren dienen dazu, den prinzipiellen Aufbau eines derartigen Leichtflüssigkeitsabscheiders und die Lage und Anordnung des selbsttätigen Abschlusses darzustellen. Beispielsweise kann der in den Figuren 4 und 5 dargestellte erfindungsgemäß ausgebildete selbsttätig wirkende Abschluß bei einem derartigen Leichtflüssigleitsabscheider anstelle des dargestellten selbsttätigen Abschlusses nach dem Stand der Technik Anwendung finden.

Wie die Figuren 1 bis 3 zeigen, ist der Leichtflüssigkeitsabscheider 1 im unteren Teil zylinderförmig und im oberen Teil konisch ausgebildet. Der obere konische Teil endet in einer Öffnung, die über einen Deckel 3 verschlossen ist. Über diese Öffnung kann die Leichtflüssigkeit aus dem Abscheider entsorgt, beispielsweise abgepumpt werden.

Der Abscheider besitzt einen Zulauf 2 für das zu trennende Schwerflüssigkeits/Leichtflüssigkeits-Gemisch und einen Ablauf 4 für die Schwerflüssigkeit, der vom unteren Bereich des Abscheiders ausgeht. Zulauf und Ablauf sind als Rohre mit geeignetem Durchmesser ausgebildet. Den Schwerflüssigkeitsablauf 4, d. h. das im Inneren des Abscheiders angeordnete Rohrende, umgibt ein Ventilsitz 8, der bei dieser Ausführungsform des Standes der Technik horizontal ausgebildet ist. Auf diesen Ventilsitz 8 setzt sich ein Ventilkörper 7, der über eine Stange mit einem Schwimmer 6 verbunden ist, welcher in einem aus Vertikalstäben und diese miteinander verbindenden Horizontalstäben bestehenden Käfig 5 geführt ist. Wie eingangs bereits erläutert, schwebt der Schwimmer 6 im Grenzbereich zwischen Leichtflüssigkeit und Schwerflüssigkeit, wobei die Grenzfläche zwischen beiden Flüssigkeiten mit zunehmender Dicke der Leichtflüssigkeitsschicht im Abscheider absinkt. Auf diese Weise sinkt der Schwimmer 6 mit ab und führt über seine starre Verbindung mit dem Ventilkörper 7 diesen mit seiner Unterseite gegen den Ventilsitz 8. Dadurch wird der Schwerflüssigkeitsablauf 4 geschlossen, so daß bei weiter anwachsender Leichtlüssigkeitsdicke keine Leichtflüssigkeit über den Schwerflüssigkeitsablauf 4 in das Kanalnetz gelangen kann.

Figur 4 zeigt eine Darstellung eines erfindungsgemäß ausgebildeten selbsttätigen Abschlusses in schematischer Weise. Wie beim Stand der Technik besitzt der Abschluß einen Ventilssitz 17, der am sich im Inneren des Abscheiders befindenden Rohrende des Schwerflüssigkeitsablaufes 4 angeordnet ist. Mit diesem Ventilsitz wirkt ein Ventilkörper 12 zusammen, der über eine Stange 11 mit einem Schwimmer 10 verbunden ist. Der Schwimmer 10 wird durch einen Käfig 19 aus mehreren Vertikalstäben geführt, so daß er eine Aufund Abbewegung durchführt und nicht verkantet. Die Funktionsweise dieses selbsttätig wirkenden Abschlusses entspricht der des Abschlusses der Figuren 1 bis 3.

Wie man Figur 4 des weiteren entnehmen kann, besitzt der Ventilsitz 17 eine konische innere Dichtfläche 18, die sich nach unten und innen erstreckt. Der Ventilkörper 12 besitzt einen oberen pilzförmigen Teil 13 und einen unteren kegelstumpfförmigen Teil 15, der konische Dichtflächen 16 trägt, die denen des Ventilsitzes entsprechen. Der pilzförmige obere Teil 13 des Ventilkörpers ist etwas breiter ausgebildet als der konische untere Teil 15, so daß er diesen seitlich überragt und sich ein entsprechender Rücksprung ergibt. Die Unterseite des Ventilkörpers 12 setzt sich somit aus einer äußeren horizontalen Ringfläche 21 und einer sich hieran anschließenden konischen Fläche 16 zusammen. Beide Flächen sind als Dichtflächen ausgebildet und wirken mit der Oberseite 22 und der konischen Dichtfläche 18 des Ventilsitzes 17 zusammen.

Des weiteren besitzt der in Figur 4 gezeigte selbsttätig wirkende Abschluß eine Vielzahl von kurzen, vom Ventilsitz 17 ausgehenden auswärts und aufwärts gekrümmten Stäben 20, die als Führung für den Ventilkörper 12 dienen, damit dieser in Horizontallage in den Ventilsitz eingeführt wird und nicht verkantet.

Die Oberseite 14 des oberen Teiles 13 des Ventilkörpers 12 ist gekrümmt ausgebildet, um Ablagerungen von Feststoffen, beispielsweise Schlamm, zu verhindern.

Figur 5 zeigt den genauen Aufbau der Ventilkonstruktion des selbsttätig wirkenden Abschlusses der Figur 4. Der Abstand zwischen dem Schwimmer 10 und dem Ventilkörper 12 ist hierbei verkürzt dargestellt. Man erkennt, daß der Randbereich der Oberseite 14 des Ventilkörpers 12 stärker gekrümmt ist als deren mittlerer Bereich. Wenn sich der Ventilkörper 12 dem Ventilsitz 17 nähert, schmiegt sich der Randbereich der Oberseite 14 des Ventilkörpers 12 an die kurzen Führungsstäbe 20 an und gleitet entlang diesen, so daß hierdurch ein Verkanten verhindert wird bzw. ein bereits verkanteter Ventilkörper in seine Horizontallage zurückgeführt wird. Es versteht sich, daß die Führungsstäbe 20 in gleichmäßigen Abständen um den Ablauf 4 herum verteilt sind. Der Neigungwinkel der konischen Dichtflächen 16, 18 gegenüber der Vertikalen beträgt bei dem dargestellten Ausführungsbeispiel 10°.

Der Ventilkörper und/oder der Ventilsitz bestehen vorzugsweise aus elastischem und leichtflüssigkeitsbeständigem Dichtungsmaterial, wie beispielsweise entsprechenden Kunststoffen, insbesondere Neoprene.

## Patentansprüche

1. Selbsttätig wirkender Abschluß für den Schwerflüssigkeitsablauf (4) eines Leichtflüssigkeitsabscheiders (1) mit einem den Schwerflüssigkeitsablauf (4) umgebenden Ventilsitz (17) mit in Richtung der abfließenden Schwerflüssigkeit konischer Dichtfläche (18) und einer sich hieran anschließenden Horizontalfläche, einem mit dem Ventilsitz (17) in und außer Anlage tretenden Ventilkopf (12) zum Schließen und Öffnen des Schwerflüssigkeitsablaufes (4) mit einer mit der konischen Dichtfläche (18) des Ventilsitzes (17) zusammenwirkenden Dichtfläche (16), einem sich in Abhängigkeit vom Leichtflüssigkeitsstand im Abscheider (1) auf- und abbewegenden Schwimmer (6), an dem der Ventilkörper (12) befestigt ist, und einer Führung für den Schwimmer (6), dadurch gekennzeichnet, daß die mit der konischen Dichtfläche (18) des Ventilsitzes (17) zusammenwirkende Dichtfläche (16) des Ventilkörpers (12) konisch ausgebildet ist und der Ventilkörper (12) eine sich hieran anschließende horizontale Auflagefläche (21) aufweist und daß die Horizontalfläche des Ventilsitzes (17) eine mit der Auflagefläche (21) des Ventilkörpers (12) zusammenwirkende Auflagefläche (22) bildet.

2. Selbsttätig wirkender Abschluß nach Anspruch 1, dadurch gekennzeichnet, daß die Auflageflächen (21, 22) des Ventilkörpers (12) und des Ventilsitzes (17) als Ringflächen ausgebildet sind.

3. Selbsttätig wirkender Abschluß nach Anspruch 1 oder 2, dadurch gekennzeichnet, daß der Ventilkörper (12) tellerförmig ausgebildet ist.

4. Selbsttätig wirkender Abschluß nach einem der vorangehenden Ansprüche, dadurch gekennzeichnet, daß der Ventilkörper (12) eine gekrümmte Oberseite (14) besitzt.

5. Selbsttätig wirkender Abschluß nach Anspruch 4, dadurch gekennzeichnet, daß die Oberseite (14) in ihrem Randbereich stärker gekrümmt ist als in ihrem mittleren Bereich.

6. Selbsttätig wirkender Abschluß nach einem der vorangehenden Ansprüche, dadurch gekennzeichnet, daß der Schwimmer (10) breiter ausgebildet ist als der Ventilkörper (12).

7. Selbsttätig wirkender Abschluß nach einem der vorangehenden Ansprüche, dadurch gekennzeichnet, daß die Schwimmerführung durch eine Vielzahl von Vertikalstäben (19) gebildet ist.

8. Selbsttätig wirkender Abschluß nach einem der vorangehenden Ansprüche, dadurch gekennzeichnet, daß der Ventilkörper (12) eine eigene Führung aufweist.

9. Selbsttätig wirkender Abschluß nach Anspruch 8, dadurch gekennzeichnet, daß sich die Führung des Ventilkörpers (12) ausgehend vom Ventilsitz (17) nach oben und außen erweitert.

10. Selbsttätig wirkender Abschluß nach Anspruch 9, dadurch gekennzeichnet, daß die Führung des Ventilkörpers (12) durch eine Vielzahl von sich vom Ventilsitz (17) nach oben und außen erstreckenden Stäben (20) gebildet ist.

11. Selbsttätig wirkender Abschluß nach Anspruch 10, dadurch gekennzeichnet, daß die Stäbe gekrümmt sind.

12. Selbsttätig wirkender Abschluß nach einem der vorangehenden Ansprüche, dadurch gekennzeichnet, daß die Dichtflächen (18, 16) vom Ventilsitz (17) und Ventilkörper (12) unter einem Winkel von 10° zur Vertikalen angeordnet sind.

## Claims

1. An automatically acting shut-off for the heavy liquid outlet (4) of a light liquid separator (1), said shut-off comprising a valve seat (17) surrounding the heavy liquid outlet (4) and having a, in the direction of the outflowing heavy liquid, a conical sealing surface (18) and a horizontal surface joining thereto, a valve body (12) engaging and disengaging the valve seat (17) for closing and opening the heavy liquid outlet (4) with a sealing surface (16) cooperating with the conical sealing surface (18) of the valve seat (17), a float (6) moving up and down in response to the light liquid level within the separator (1), at which the valve body (12) is mounted, and a guide means for the float (6), characterized in that the sealing surface (16) of the valve body (12) cooperating with the conical sealing surface (18) of the valve seat (17) is conically formed and the valve body (12) has a horizontal bearing surface (21) joining thereto, and in that the horizontal surface of the valve seat (17) forms a bearing surface (22) cooperating with the bearing surface (21) of the valve body (12).

2. The automatically acting shut-off according to claim 1, characterized in that the bearing surfaces (21, 22) of the valve body (12) and of the valve seat (17) are formed as annular surfaces.

3. The automatically acting shut-off according to claim 1 or 2, characterized in that the valve body (12) is dish-like formed.

4. The automatically acting shut-off according to one of the preceding claims, characterized in that the valve body (12) has a curved upper side (14).

5. The automatically acting shut-off according to claim 4, characterized in that the upper side (14) has a larger curvature in its edge portion than in its central portion.

6. The automatically acting shut-off according to one of the preceding claims, characterized in that the float (10) has a larger width than the valve body (12).

7. The automatically acting shut-off according to one of the preceding claims, characterized in that the guide means of the float is formed by a plurality of vertical rods (19).

8. The automatically acting shut-off according to one of the preceding claims, characterized in that the valve body (12) has an own guide means.

9. The automatically acting shut-off according to claim 8, characterized in that the guide means of the valve body (12), emanating from the valve seat (17), is upwardly and outwardly enlarged.

10. The automatically acting shut-off according to claim 9, characterized in that the guide means of the valve body (12) is formed by a plurality of rods (20) extending from the valve seat (17) upwardly and outwardly.

11. The automatically acting shut-off according to claim 10, characterized in that the rods are curved.

12. The automatically acting shut-off according to one of the preceding claims, characterized in that the sealing surfaces (18, 16) of the valve seat (17) and the valve body (12) form an angle of 10° with respect to a vertical line.

## Revendications

1. Fermeture à action automatique pour l'évacuation (4) du liquide lourd d'un séparateur (1) de liquide léger, comportant un siège de vanne (17) entourant l'évacuation (4) de liquide lourd, à surface d'étanchéité conique (18) et une surface horizontale qui s'y raccorde, une tête de vanne (12) se plaçant sur le siège de vanne (17) et se séparant de ce dernier pour fermer et ouvrir l'évacuation (4) de liquide lourd, une surface d'étanchéité (16) coopérant avec la surface d'étanchéité conique (18) du siège de vanne (17), un flotteur (6) se déplaçant vers le haut et vers le bas en fonction de l'état du liquide léger dans le séparateur (1) et auquel le corps de vanne (12) est fixé, et un guide pour le flotteur (6), caractérisé en ce que la surface d'étanchéité (16) du corps de vanne (12), qui coopère avec la surface d'étanchéité conique (18) du siège de vanne (17) est de configuration conique, et le corps de vanne (12) présente une surface horizontale d'appui (21) qui s'y raccorde, et en ce que la surface horizontale du siège de vanne (17) forme une surface d'appui (22) qui coopère avec la surface d'appui (21) du corps de vanne (12).

2. Fermeture à action automatique selon la revendication 1, caractérisée en ce que les surfaces d'appui (21, 22) du corps de vanne (12) et du siège de vanne (17) sont configurées comme surfaces annulaires.

3. Fermeture à action automatique selon les revendications 1 ou 2, caractérisée en ce que le corps de vanne (12) est configuré en forme de plateau.

4. Fermeture à action automatique selon l'une des revendications précédentes, caractérisée en ce que le corps de vanne (12) possède une face supérieure courbée (14).

5. Fermeture à action automatique selon la revendication 4, caractérisée en ce que la face supérieure (14) est plus fortement courbée dans la région de sa bordure que dans sa région centrale.

6. Fermeture à action automatique selon l'une des revendications précédentes, caractérisée que en ce que le flotteur (10) est plus large que le corps de vanne (12).

7. Fermeture à action automatique selon l'une des revendications précédentes, caractérisée en ce que le guide de flotteur est formé par plusieurs barreaux verticaux (19).

8. Fermeture à action automatique selon l'une des revendications précédentes, caractérisée en ce que le corps de vanne (12) présente un guide propre.

9. Fermeture à action automatique selon la revendication 8, caractérisée en ce que le guide du corps de vanne (12) s'évase vers le haut et l'extérieur à partir du siège de vanne (17).

10. Fermeture à action automatique selon la revendication 9, caractérisée en ce que le guide du corps de vanne (12) est formé par plusieurs barreaux (20) s'étendant vers le haut et l'extérieur à partir du siège de vanne (17).

11. Fermeture à action automatique selon la revendication 10, caractérisée en ce que les barreaux sont courbés.

12. Fermeture à action automatique selon l'une des revendications précédentes, caractérisée en ce que les surfaces d'étanchéité (18, 16) du siège de vanne (17) et du corps de vanne (12) sont disposées suivant un angle de 10° par rapport à la verticale.
